Europäisches Patentamt

European Patent Office

Office européen des brevets

(11) Publication number: **0 281 688**
**A1**

# EUROPEAN PATENT APPLICATION

(21) Application number: **87200385.0**

(22) Date of filing: **03.03.87**

(51) Int. Cl.⁴ **H04N 1/46** , G02B 6/04 ,
G02B 6/00

(43) Date of publication of application:
**14.09.88 Bulletin 88/37**

(84) Designated Contracting States:
**AT BE CH DE ES FR GB GR IT LI LU NL SE**

(71) Applicant: **AGFA-GEVAERT naamloze**
**vennootschap**
**Septestraat 27**
**B-2510 Mortsel(BE)**

(72) Inventor: **Leonard, Jacques Victor**
**Boudewijnstraat 46**
**B-2018 Antwerpen(BE)**
Inventor: **Van Uffel, Bruno August**
**Akelei 69**
**B-2580 St. Katelijne-Waver(BE)**
Inventor: **Van Daele, Jean Alois**
**Van den Reecklaan 35**
**B-2820 Bonheiden(BE)**

(54) **Colour-scanning method and apparatus.**

(57) Method and apparatus of producing an electrical representation of a multi-colour image (2) by scanning the image by means of coloured light-beams that are obtained by directing the light emitted by (a) point-like white light source(s) (3) through appropriate colour filters (7). The coloured scanning beams are further transformed into flat beams by means of an appropriate light guide (6).

Fig. 1

## COLOUR SCANNING METHOD AND APPARATUS

The present invention relates to a method and apparatus for line-wise scanning a multi-colour image (hereafter called "coloured original") and for producing an electrical representation thereof.

It is known to achieve an electrical representation of an image by illuminating the image and by converting the image-wise modulated light (either reflected or transmitted) into an electrical analog signal (usually a video signal) by means of light sensor means, e.g. metal oxide semi-conductor devices (MOS devices), photodiodes, phototransistors, charge coupled devices or amorphous silicon light sensors. An electronic analog to digital converter can be used to convert the video signal into a digital representation.

Coloured originals cannot be digitized as readily as monochrome images by such a procedure because the light sensor means do not have the required colour-sensitivity. An electrical representation of a coloured original has to be formed by a combination of electrical representations each representing a particular colour component, e.g. a primary colour component, of the original.

It is known to produce a set of electrical representations of primary colour components of a coloured original by scanning the original by means of white light, separating the image-wise modulated light (either reflected or transmitted) into primary colour components, and of converting these colour components into corresponding electrical representations. The image-wise modulated light can be separated into primary colour components by directing it through appropriate colour filters which are positioned either between the optical focusing means and the light-sensor or between the optical focusing means and the scanned coloured original. The same sensor means can be used for converting the different primary colour light-images into electrical representations, in which case those light-images are sequentially projected onto the sensor means, the colour filters being synchronously displaced in sequence into the path of the image-wise modulated light. Alternatively the different light images can be projected simultaneously through the different filters onto the different sensor means. In either case the method has the disadvantage that the presence of light filters in the paths of the modulated light rays is liable to cause geometrical and colour distortions of the colour image as electrically represented by the output of the light-sensor means.

According to another known method the required primary colour-separation light-images of the coloured original are generated by sequentially line-wise scanning the original with primary colour light beams generated by means of (a) tubular lamp(s), eventually associated with appropriate colour filters. By placing the filters in between the light sources and the coloured original the problem of distortion of the image-wise modulated light beams is avoided. However the filters have to be wide enough effectively to cover the width of the scanned coloured original. This requirement and/or the necessity to provide and sequentially operate a plurality of light sources during the scanning operation are disadvantages of this method. Because of the size of the filters it would be difficult to provide for rapid displacement of them during the scanning operation (in case a single tubular lamp would be used).

The present invention provides a method by means of which a high-fidelity electrical representation of a coloured original can be rapidly generated without the necessity to use a plurality of light sources.

According to the present invention there is provided a method of producing an electrical representation of a multi-colour image ("coloured original") by scanning the original by means of coloured light beams to produce image-wise modulated light signals representing colour components of the original, and transforming said light signals into electrical representations of said colour components, characterised in that the scanning light composing said coloured light beams derives from one or more concentrated beams of white light emitted from (a) point-like or localised light-source (s); the or each said concentrated beam is caused to pass in sequence through appropriate colour filters, the coloured concentrated beams transmitted by said filters are directed through a light-guiding means from which the entering light emerges as a flat beam, which irradiates a line of pixels of the original and the original is line-wise scanned by each of the successively emitted flat beams.

This method avoids any image distortion caused by the presence of filters in the image-wise modulated light beams while at the same time having the advantage that it can be very conveniently performed using only one v....te light light-source, and enables very fast scanning rates to be achieved. The colour filters can be of relatively small size and easily mechanically displaceable one after the other into the path of the concentrated white light beam. The attainable scanning speed is only limited by the line time of the sensor means, e.g. the charge coupled devices, utilised for transforming the image-wise modulated light signals.

The relative displacement between the planar scanning beams and the coloured original which is necessary for the scanning procedure, is preferably effected by displacement of the coloured original while keeping the path of the scanning beams constant.

The method according to the invention can be carried out by each line of pixels by the coloured planar scanning beams before the next line of pixels is irradiated. Preferably however a multiplicity of lines of pixels is scanned first by a planar beam of one colour component before being scanned by a planar beam of another colour component. Using the latter procedure an entire document page can be scanned by each planar beam in turn.

A preferred feature resides in the mounting of the colour filters for rotational movement into and out of the path of the concentrated white light beam. The filters may for example be located on a common rotatably mounted filter wheel.

Electrical analog signals emitted by the sensor means can be converted into digital representations by means of an analog to digital converter as known per se.

The light source used can for example be a tungsten lamp which can be associated with a suitable reflector means such as a parabolic reflector for producing a converging or collimating beam.

One form of a light-guide member which may be used to convert concentrated (coloured) light beams into flat beams is a fiber optic "fan". Such a fan comprises a bundle of very thin optical fibers (e.g. diameter circa 0.5-1 mm). The light-output ends of these fibers are juxtaposed to form a long and slender light-emitting line. Their opposite input ends are tightly bundled. The light which is guided by each individual fiber is emitted at the output end of the fiber in the form of a cone. In order to delimit the line thickness that is illuminated by a fiber optics fan and in order to homogenize the light emitted by the fan, the output end of the fan can be provided with closely spaced flat reflectors parallel with the linear array of fiber ends and perpendicular to the image area. By means of reflection, the width of the illuminated line can be controlled and the light will be mixed along the line so that a substantially continuous line of light is formed.

The light-guiding means may include a rod lens located between the light guide and the original for directing and homogenizing the light.

In another embodiment, use is made of a light guide comprising a set of light-conducting strips, hereinafter called light pipes, that have bundled inlet ends and juxtaposed linearly related output ends in a simular manner to the fibers of a fiber fan.

Still another embodiment comprises a light-guiding member which is coated with light-reflecting material.

Alternative embodiments may differ by the dimensions of the pipes or fibers, by the way of bending and bundling the strips or fibers etc. In all designs incorporating light-conducting strips or fibers that are not provided with a light-reflecting surface, care is to be taken not to exceed the internal reflection angle of the used light-conducting material. It will be clear that any of the above described embodiments may be provided with a set of parallel mirrors as has been described with reference to the fiber fan.

In yet another embodiment, the light-guide comprises a rod or tube of substantially cylindrical form with a light inlet either at one end face or at both end faces. The cylinder is made out of a transparent material having a high refractive index. It is provided with means for directing the incoming light (eventually after a number of internal refractions) towards a line-like light outlet at the outer surface of the cylinder parallel with its axis. In a preferred version of such a light guide it is provided with a series of reflecting surfaces along a peripheral zone of the rod which lies diametrically opposite to the light outlet. The reflecting surfaces are in stepped or saw-tooth formation. Light can be directed into one end of the rod, in which case its opposite end can be provided with a reflecting surface so that the light which enters the rod at such an angle to its axis that the incoming light beam reaches that opposite end, is reflected back into the rod. However, light can be directed simultaneously into both ends of the rod. In this case, a light-source is provided on either side of the rod.

The invention also includes apparatus suitable for carrying out the method as hereinbefore defined. Apparatus according to the invention comprises means for generating coloured light-beams, means for bringing about relative displacement between said beams and a said coloured original to cause the original to be scanned by such beams and to transmit or reflect image-wise modulated light signals representing colour components of the original, and means for converting said light signals into electrical representations of said colour components, characterised in that the apparatus comprises means for forming light from one or more point-like or localised light sources into (a) concentrated beam(s) of white light; colour filters mounted for movement in sequence into the path of such concentrated beam(s); and light-guiding means which is located in the path of the concentrated beams of coloured light leaving said filters and which transforms entering light into a flat beam for irradiating a line of pixels of a said coloured original.

Certain embodiments of the present invention will now be described, by way of example, with reference to the accompanying diagrammatic drawings, in which

Figure 1 represents one embodiment of the apparatus according to the present invention, and

Figure 2 shows one form of light guide.

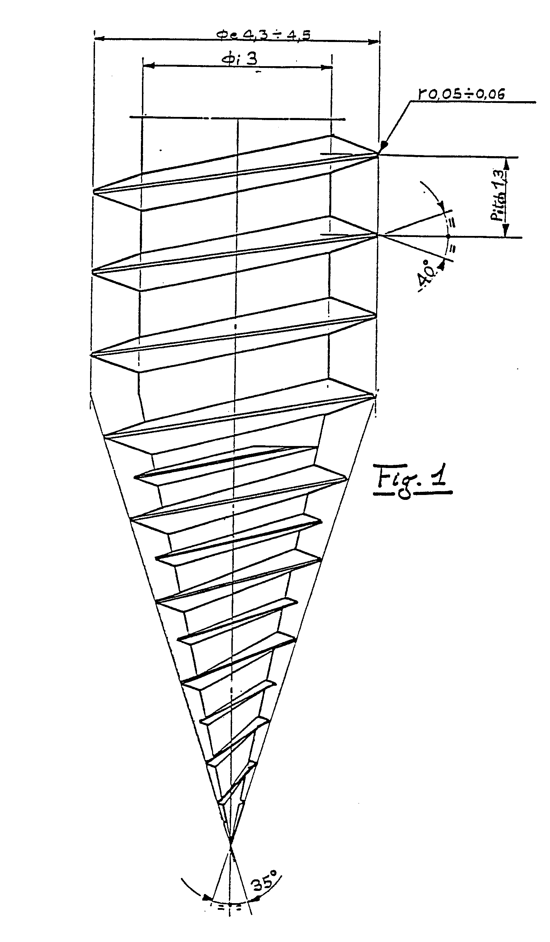

In figure 1 the line 1 represents a line of information on a document 2 which is being scanned and digitized.

Light emitted by a point-like converging light-source 3, such as a tungsten lamp is formed by means of an appropriate reflector into a concentrated beam. This beam is directed through a set of infrared filters 4 and a filter wheel 7 onto the inlet face 5 of a light-guiding rod 6. The filter wheel comprises three primary colour filter segments.

The scanner furthermore comprises a rod-like lens 8 for focusing the light that is emitted from the outlet of the rod 6 onto the line to be scanned.

The light-beam is modulated by the image information. The image-wise modulated light is focused by means of light-focusing means 9 onto a sensor means 10. The sensor means is formed by a linear array of 3456 integrated charge coupled devices by means of which the intensity pattern of the reflected light is converted into an analog video signal representing the scanned image.

The detected analog video signal is read out and is eventually processed and/or converted into a digital representation by electronic signal processing means 11.

The apparatus works as follows. The original to be scanned is transported through the scanning light beam. Each line of pixels of the original is successively illuminated by means of red, green and blue light, the filter wheel 7 being rotated so that the colour filters are positioned one after the other in the light path.

The image-wise modulated red, green and blue light beams representing the colour components of each line are focused onto the sensor means and converted into video signals that represent the corresponding primary colour components of said line.

By means of the three video signals generated for all of the lines, a representation of the complete original image, including the colour information, can be reconstructed.

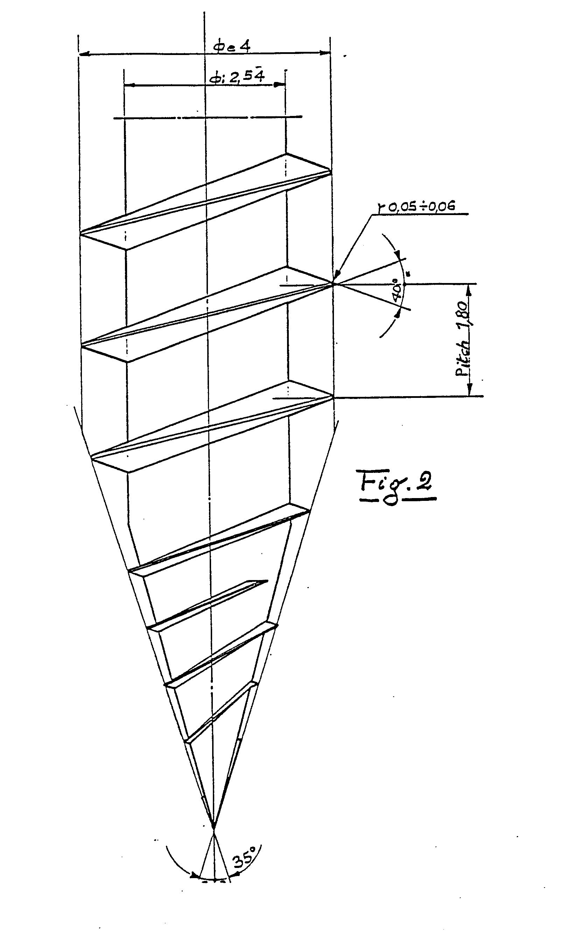

Referring to figure 2, the light guide 6 has a rod-like cylindrical form and is provided with an inlet face 5 through which light emitted by the light-source 3 at different angles to the rod axis enters the light-guiding member.

Opposite to the light inlet face of the light conducting rod a light reflecting face (mirror) 14 is situated so that the light which reaches the opposite end is reflected back into the rod. Along a surface zone of the rod there is a series of reflecting surfaces 13 in a stepped arrangement. A light outlet is formed diametrically opposite to that zone. In a document scanning apparatus this rod is arranged with its axis parallel to a scanning line.

The operation of the light guide is as follows. The light emitted by the point-like converging or collimating light-source enters the light conducting rod at different angles. The light is partly reflected by the mirror surface at the end side of the rod that lies opposite to the inlet face. Another part of the light is refracted in the inner part of the light guide due to the high refractive index of the transparent material out of which the light guide is made. Still another part of the light emitted by the light source is reflected by the stepped reflecting faces, possibly after being scattered. The reflected light which emerges from the light outlet of the rod is further collimated and/or converged by means of a suitable lens so that a substantially flat beam is formed.

Another embodiment of a light-guiding member (not shown) has a form like that shown in figure 2 except that it does not have the reflecting face 14. Each end of the rod serves as light inlet. The light that is directed into the rod derives from two point-like light-sources, one at either end of the rod.

## Claims

1. A method of producing an electrical representation of a multi-colour image ("coloured original") by scanning the original by means of coloured light beams to produce image-wise modulated light signals representing coulour components of the original, and transforming said light signals into electrical representations of said colour components, characterised in that the scanning light composing said coloured light beams derives from one or more concentrated beams of white light emitted from (a) point-like or localised light-source (s); the or each said concentrated beam is caused to pass in sequence through appropriate colour filters, the coloured concentrated beams transmitted by said filters are directed through a light-guiding means from which the entering light emerges as a flat beam, which irradiates a line of pixels of the original and the original is line-wise scanned by each of the successively emitted flat beams.

2. A method according to claim 1, wherein said filters are mounted on a common carrier which is rotated to bring the filters successively into the path of the concentrated beam of white light.

3. A method according to claim 1 or 2, wherein a multiplicity of lines of pixels of the coloured original is scanned first by a flat beam of one component colour before being scanned by a flat beam of another component colour.

4. A method according to any preceding claim, wherein the coloured concentrated light beams are directed along a light guide in the form of a rod or a tube which has reflecting surfaces therealong and a peripheral longitudinal light-emitting outlet.

5. A method according to claim 4, wherein said reflecting surfaces are in stepped arrangement.

6. A method according to any of claims 1 to 3, wherein the coloured concentrated light beams are directed into one end of a light guide comprising a fan of optical fibers or light-conducting strips, the fibers or strips being bundled together at the light entry end of the guide and being in side by side linear array at its light exit end.

7. Apparatus for producing an electrical representation of a multi-colour image ("coloured original") comprising means for generating coloured light-beams, means for bringing about relative displacement between said beams and a said coloured original to cause the original to be scanned by such beams and to transmit or reflect imagewise modulated light signals representing colour components of the original, and means for converting said light signals into electrical representations of said colour components, characterised in that the apparatus comprises means for forming light from one or more point-like or localised light sources into (a) concentrated beam(s) of white light; colour filters mounted for movement in sequence into the path of such concentrated beam(s); and light-guiding means which is located in the path of the concentrated beams of coloured light leaving said filters and which transforms entering light into a flat beam for irradiating a line of pixels of a said coloured original.

8. Apparatus according to claim 7, wherein said filters are mounted on a common carrier which is rotatable to bring the filters successively into the path of the concentrated beam of white light.

9. Apparatus according to claim 7 or 8, wherein the light-guide is in the form of a tube provided with interior reflecting surfaces and a longitudinal light-emitting outlet at its periphery.

10. Apparatus according to claim 7, wherein said reflecting surfaces are in a stepped arrangement.

11. Apparatus according to claim 7 or 8, wherein the light-guide comprises a fan of optical fibers or light-conducting strips, the fibers or strips being bundled together at the light entry of the guide and being in side by side linear array at its light exit end.

Fig. 1

Fig.2

European Patent Office

**EUROPEAN SEARCH REPORT**

Application number

EP 87 20 0385

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 490 740 (MORIGUCHI)<br><br>* Column 3, line 24 - column 5, line 7 * | 1-3,6-8,11 | H 04 N 1/46<br>G 02 B 6/04<br>G 02 B 6/00 |
| Y | | 4,5,9,10 | |
| | --- | | |
| Y | US-A-3 758 197 (KLANG et al.)<br><br>* Abstract; column 4, lines 54-59; column 5, lines 10-17 * | 4,5,9,10 | |
| | ----- | | |

**TECHNICAL FIELDS SEARCHED (Int. Cl.4)**

H 04 N 1/00
G 02 B 5/00

The present search report has been drawn up for all claims

| Place of search | Date of completion of the search | Examiner |
|---|---|---|
| THE HAGUE | 27-10-1987 | HAZEL J.F. |